(19) **Europäisches Patentamt / European Patent Office / Office européen des brevets**

(11) **EP 2 913 601 A1**

(12) **EUROPEAN PATENT APPLICATION**
published in accordance with Art. 153(4) EPC

(43) Date of publication:
**02.09.2015 Bulletin 2015/36**

(51) Int Cl.:
*F24F 11/02* (2006.01)    *F25B 49/02* (2006.01)

(21) Application number: **12887248.8**

(22) Date of filing: **25.10.2012**

(86) International application number:
**PCT/JP2012/077553**

(87) International publication number:
**WO 2014/064792 (01.05.2014 Gazette 2014/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mitsubishi Electric Corporation Tokyo 100-8310 (JP)**

(72) Inventor: **KAWAMURA, Masatoshi Tokyo 100-8310 (JP)**

(74) Representative: **Pfenning, Meinig & Partner GbR Patent- und Rechtsanwälte Theresienhöhe 11a 80339 München (DE)**

(54) **MONITORING SYSTEM**

(57)    In a monitoring system 1, operation data on an air-conditioning apparatus 31 is exchanged between the air-conditioning apparatus 31 and a management apparatus 61. The management apparatus 61 includes a failure cause diagnosis unit 303 that diagnoses the cause of a failure of the air-conditioning apparatus 31 on the basis of the operation data. A refrigeration capacity abnormality determination value for determining whether a refrigeration capacity calculated from the operation data on the air-conditioning apparatus 31 is abnormal and a refrigeration capacity change rate abnormality determination value for determining whether a refrigeration capacity change rate of the refrigeration capacity with respect to time is abnormal are set in the failure cause diagnosis unit 303. The failure cause diagnosis unit 303 determines that the air-conditioning apparatus 31 is in a failed state if the refrigeration capacity is less than or equal to the refrigeration capacity abnormality determination value. The failure cause diagnosis unit 303 determines that the cause of the failure of the air-conditioning apparatus 31 is not aging degradation if the refrigeration capacity change rate of the refrigeration capacity is greater than the refrigeration capacity change rate abnormality determination value, and determines that the cause of the failure of the air-conditioning apparatus 31 is aging degradation if the refrigeration capacity change rate of the refrigeration capacity is not greater than the refrigeration capacity change rate abnormality determination value.

FIG. 1

## Description

Technical Field

The present invention relates to a monitoring system.

Background Art

There is a conventional monitoring system which determines whether refrigerant is leaking on the basis of the degree of the difference between a measured value and a value obtained when refrigerant is not leaking (see, for example, Patent Literature 1).

There is another conventional monitoring system which determines whether an air-conditioning apparatus is in an abnormal state by comparing a derivative value derived on the basis of a status value contained in operation data with a normal value corresponding to the derivative value (see, for example, Patent Literature 2).

There is still another conventional monitoring system which diagnoses that a compressor or the like has failed if information on the internal temperature of the compressor or the like that is obtained in an operating state differs from information on the internal temperature of the compressor or the like that is supposed to be obtained in that operating state (see, for example, Patent Literature 3).

Citation List

Patent Literature

Patent Literature 1: Japanese Patent No. 4396286 (paragraph [0056])
Patent Literature 2: Japanese Patent No. 4281334 (paragraph [0061])
Patent Literature 3: Japanese Unexamined Patent Application Publication No. 2004-92976 (paragraph [0038])

Summary of Invention

Technical Problem

According to the conventional monitoring system (Patent Literature 1), it is possible to improve the accuracy of detection of refrigerant leakage on the basis of the degree of the difference between a measured value and a value obtained when refrigerant is not leaking. However, the cause of the leakage of refrigerant cannot be identified.

According to the another conventional monitoring system (Patent Literature 2), it is possible to improve the accuracy in determining whether the air-conditioning apparatus is in an abnormal state by determining an abnormal state on the basis of a derivative value and a normal value. However, the cause of the air-conditioning apparatus being in the abnormal state cannot be identified.

According to still another monitoring system (Patent Literature 3), since a failure is diagnosed on the basis of the degree of the difference between obtained information and information supposed to be obtained in a normal operating state, it is possible to improve the accuracy of failure diagnosis. However, the cause of the failure of the compressor or the like cannot be identified.

That is, all of the monitoring systems (Patent Literatures 1 through 3) can only improve the accuracy of failure diagnosis of an air-conditioning apparatus, but cannot identify the cause of the failure of the air-conditioning apparatus.

The present invention has been made to overcome the above problem, and aims to provide a monitoring system capable of identifying the cause of a failure of an air-conditioning apparatus.

Solution to Problem

According to the present invention, there is provided a monitoring system in which operation data on at least one air-conditioning apparatus is exchanged between the at least one air-conditioning apparatus and a management apparatus that manages the at least one air-conditioning apparatus. The management apparatus includes a failure cause diagnosis unit that diagnoses a cause of a failure of the at least one air-conditioning apparatus on the basis of the operation data. A refrigeration capacity abnormality determination value for determining whether a refrigeration capacity calculated from the operation data on the at least one air-conditioning apparatus is abnormal and a refrigeration capacity change rate abnormality determination value for determining whether a refrigeration capacity change rate of the refrigeration capacity with respect to time is abnormal are set in the failure cause diagnosis unit. The failure cause diagnosis unit determines that the at least one air-conditioning apparatus is in a failed state if the refrigeration capacity is less than or equal to the refrigeration capacity abnormality determination value. The failure cause diagnosis unit determines that the cause of the failure of the at least one air-conditioning apparatus is not aging degradation if the at least one air-conditioning apparatus is in the failed state and the refrigeration capacity change rate of the refrigeration capacity is greater than the refrigeration capacity change rate abnormality determination value, and determines that the cause of the failure of the at least one air-conditioning apparatus is aging degradation if the at least one air-conditioning apparatus is in the failed state and if the refrigeration capacity change rate of the refrigeration capacity is not greater than the refrigeration capacity change rate abnormality determination value.

Advantageous Effects of Invention

The present invention is advantageous in that it is possible to identify the cause of a failure of an air-conditioning apparatus by comparing the change rate of the refrigeration capacity with an abnormality determination value over a certain period prior to the failure.

Brief Description of Drawings

[Fig. 1] Fig. 1 illustrates an exemplary schematic configuration of a monitoring system 1 according to Embodiment 1 of the present invention.
[Fig. 2] Fig. 2 illustrates an exemplary configuration of a refrigerant circuit 35 according to Embodiment 1 of the present invention.
[Fig. 3] Fig. 3 illustrates an exemplary functional configuration of a remote monitoring center 15 according to Embodiment 1 of the present invention.
[Fig. 4] Fig. 4 illustrates changes in refrigeration capacity with time according to Embodiment 1 of the present invention.
[Fig. 5] Fig. 5 is a flowchart illustrating a failure diagnosis process according to Embodiment 1 of the present invention.
[Fig. 6] Fig. 6 is a flowchart illustrating a refrigeration capacity calculation process according to Embodiment 1 of the present invention.
[Fig. 7] Fig. 7 is a flowchart illustrating a capacity variation calculation process according to Embodiment 1 of the present invention.
[Fig. 8] Fig. 8 illustrates predetermined time intervals for calculation of a capacity change rate with respect to time according to Embodiment 1 of the present invention.
[Fig. 9] Fig. 9 is a flowchart illustrating a failure cause determination process according to Embodiment 1 of the present invention.
[Fig. 10] Fig. 10 is a flowchart illustrating a failure prediction process according to Embodiment 1 of the present invention.

Description of Embodiments

Hereinafter, an embodiment of the present invention will be described in detail with reference to the drawings.

Embodiment 1

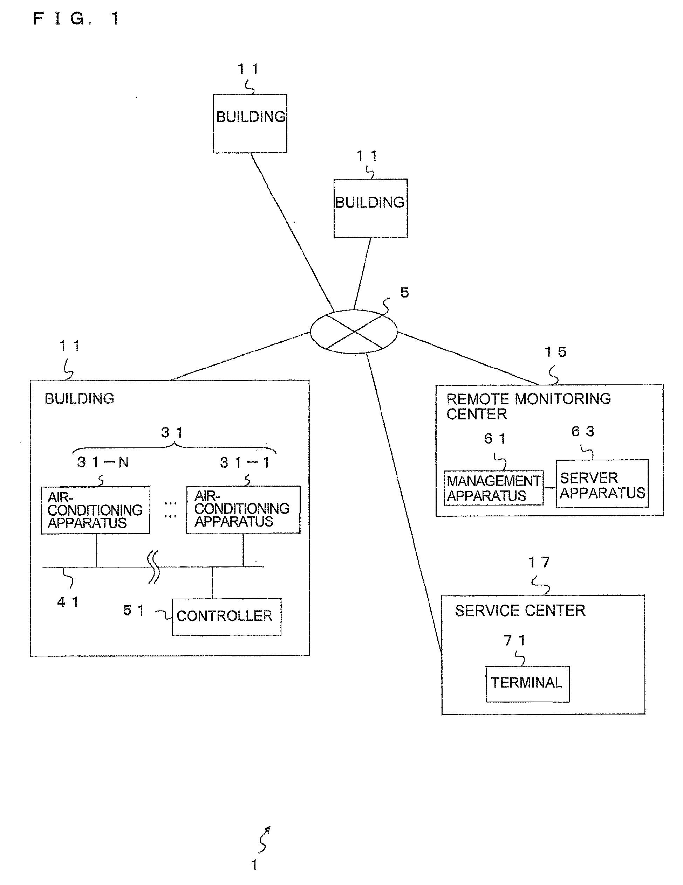

Fig. 1 illustrates an exemplary schematic configuration of a monitoring system 1 according to Embodiment 1 of the present invention. As illustrated in Fig. 1, the monitoring system 1 includes a remote monitoring center 15. The remote monitoring center 15 communicates with air-conditioning apparatuses 31-1 through 31-N installed in each of buildings 11 via a communication network 5, thereby the monitoring system 1 monitors the air-conditioning apparatuses 31-1 through 31-N of each building 11.

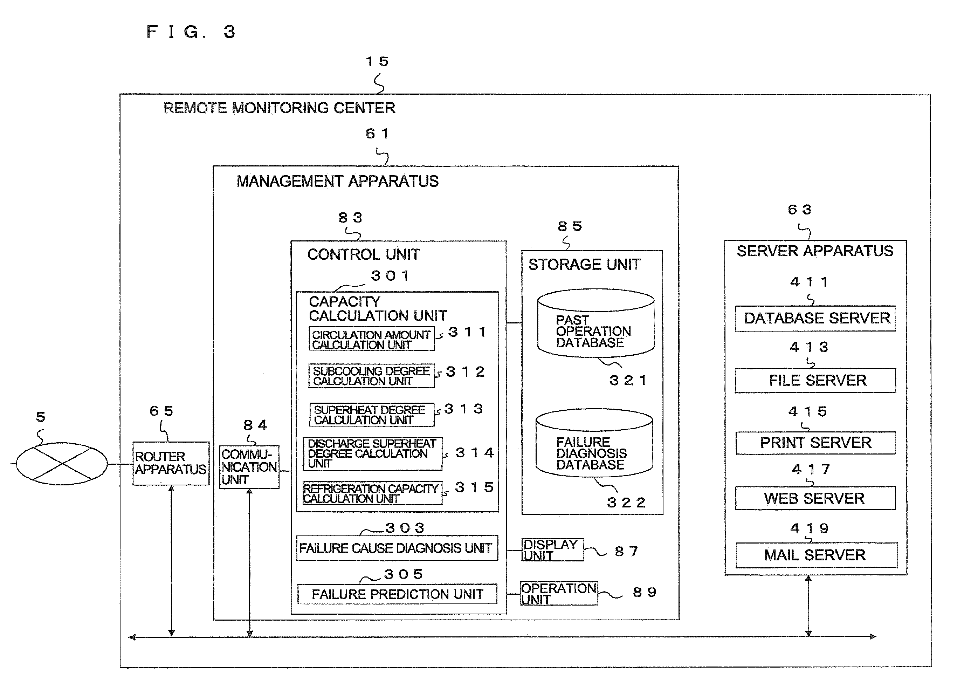

The remote monitoring center 15 includes a management apparatus 61 and a server apparatus 63 and may include other devices. As will be described in detail below with reference to Fig. 3, the management apparatus 61 performs failure diagnosis or the like of the air-conditioning apparatuses 31-1 through 31-N of each building 11, and the server apparatus 63 operates various servers in cooperation with the management apparatus 61.

The building 11 may be a building, factory, or the like, for example. The building 11 includes the air-conditioning apparatuses 31-1 through 31-N and a controller 51, and is configured such that the air-conditioning apparatuses 31-1 through 31-N can communicate with each other via a communication line 41.

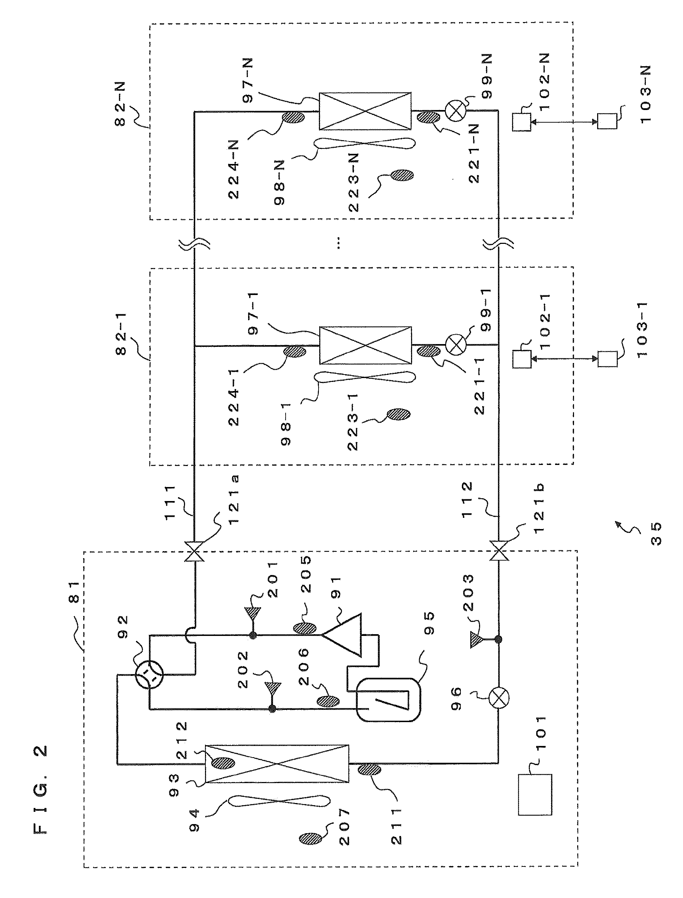

As will be described below with reference to Fig. 2, each of the air-conditioning apparatuses 31-1 through 31-N includes a refrigerant circuit 35, and supplies conditioned air to the space or the like provided in the building 11 by using the refrigerant circuit 35. Note that the air-conditioning apparatuses 31-1 through 31-N are referred to as "air-conditioning apparatuses 31" when not particularly distinguished from each other.

As mentioned above, the controller 51 is connected to the air-conditioning apparatuses 31 via the communication line 41. The controller 51 supplies various setting values, various control instructions, and the like, to the air-conditioning apparatuses 31 via the communication line 41, and thus controls the air-conditioning apparatuses 31. The controller 51 performs communication via the communication line 41 and the communication network 5 when communicating with the outside. For example, the controller 51 relays communication between the air-conditioning apparatuses 31 and the remote monitoring center 15.

That is, the air-conditioning apparatuses 31 communicate with the remote monitoring center 15 via the controller 51.

The monitoring system 1 further includes a service center 17. The service center 17 provides various services related to maintenance or the like of the air-conditioning apparatuses 31, and includes a terminal 71. The terminal 71 communicates with the remote monitoring center 15 and the like via the communication network 5, and receives various types of information. For example, upon receiving information indicating an abnormality in the air-conditioning apparatus 31 installed in the building 11 from the remote monitoring center 15, the terminal 71 notifies a maintenance staff or the like belonging to the service center 17 of the abnormality such that the maintenance staff is sent.

Notifying means may notify the maintenance staff of the abnormality via a monitor (not illustrated), for example. The notifying means is not particularly limited, and may issue a notification to a mobile phone or the like of the maintenance staff from the terminal 71, for example.

The communication network 5 is a communication medium conforming to the Internet Protocol, for example, but is not so limited. For example, the communication network 5 may be a communication network conforming to another communication protocol. Further, the communication network 5 may be a communication medium for wired communication or a communication medium for wireless communication.

Fig. 2 illustrates an exemplary configuration of the refrigerant circuit 35 according to Embodiment 1 of the present invention. As illustrated in Fig. 2, the refrigerant circuit 35 includes a heat-source-side unit 81 and load-side units (use-side units) 82-1 through 82-N.

The heat-source-side unit 81 is a so-called outdoor unit. The heat-source-side unit 81 includes, as a main circuit of the refrigerant circuit 35, a compressor 91, a four-way valve 92, a heat-source-side heat exchanger 93, an opening-degree-variable outdoor expansion device 96, and an accumulator 95, which are connected sequentially. The heat-source-side unit 81 includes a heat-source-side control unit 101. The heat-source-side control unit 101 controls the compressor 91 and the like and supplies various signals to the outside, on the basis of detection results of various sensors (described below).

The load-side unit 82-1 is a so-called indoor unit, and includes a load-side heat exchanger (use-side heat exchanger) 97-1 and an indoor expansion device 99-1. The load-side unit 82-1 includes a load-side control unit 102-1 and a remote controller 103-1. The load-side control unit 102-1 controls the indoor expansion device 99-1 and the like and supplies various signals to the outside, on the basis of detection results of various sensors (described below) and control instructions from the remote controller 103-1. The load-side units 82-2 through 82-N have the same configuration as that of the load-side unit 82-1, and description thereof will not be provided.

Note that the load-side units 82-1 through 82-N are referred to as "load-side units 82" when not particularly distinguished from each other. Also, the load-side heat exchangers 97-1 through 97-N are referred to as "load-side heat exchangers 97" when not particularly distinguished from each other. Also, the indoor expansion devices 99-1 through 99-N are referred to as "indoor expansion devices 99" when not particularly distinguished from each other. The load-side control units 102-1 through 102-N are referred to as "load-side control units 102" when not particularly distinguished from each other. The remote controllers 103-1 through 103-N are referred to as "remote controllers 103" when not particularly distinguished from each other.

The heat-source-side unit 81 and the load-side unit 82 are connected to each other with a first connection pipe 111 and a second connection pipe 112, via a valve 121 a and a valve 121 b, respectively. Note that the valve 121 a and the valve 121 b are referred to as "valves 121" when not particularly distinguished from each other.

The refrigerant circuit 35 that circulates refrigerant through the compressor 91, the four-way valve 92, the heat-source-side heat exchanger 93, the outdoor expansion device 96, the indoor expansion device 99, the load-side heat exchanger 97, and the accumulator 95. The accumulator 95 accumulates excess refrigerant.

Note that the indoor expansion device 99 corresponds to an expansion valve in the present invention.

Devices provided in each heat exchanger will be described. The heat-source-side heat exchanger 93 is provided with an outdoor fan 94 that blows air. The load-side heat exchangers 97-1 through 97-N are provided with indoor fans 98-1 through 98-N, respectively, that send air. Note that the indoor fans 98-1 through 98-N are referred to as "indoor fans 98" when not particularly distinguished from each other. Each of the outdoor fan 94 and the indoor fans 98 includes a centrifugal fan, a multi-blade fan, or the like, driven by a DC motor (not illustrated), and is capable of adjusting the amount of blowing air.

Examples of devices that can be driven other than the outdoor fan 94 and the indoor fans 98 will be described. The compressor 91 is a compressor capable of changing the operating capacity. The compressor 91 includes a positive-displacement compressor that is driven by a motor controlled by an inverter, for example. The valve 121 includes a vale capable of opening and closing, such as a ball valve, an on-off valve, and an operating valve, for example. The four-way valve 92 switches the path through which the refrigerant flows upon switching between the heating operation and cooling operation.

The refrigerant circuit 35 described above includes the four-way valve 92, but is not so limited. For example, the refrigerant circuit 35 does not have to include the four-way valve 92 and may perform only the heating operation (including the air blowing operation). Further, for example, the refrigerant circuit 35 does not have to include the four-way valve 92, and may perform only the cooling operation. The refrigerant circuit 35 described above includes the accumulator 95, but is not so limited. For example, the refrigerant circuit 35 does not have to include the accumulator 95. Further, the number of load-side units 82 and their capacity are not particular limited.

The following describes refrigerant circulating in the refrigerant circuit 35 and fluid with which the refrigerant exchanges heat. The type of the refrigerant circulating in the refrigerant circuit 35 is not particularly limited, and any refrigerant may be used. For example, the refrigerant may be a natural refrigerant, such as carbon dioxide ($CO_2$) and helium, or an alternative refrigerant not containing chlorine, such as R410A, R407C, and R404A. The fluid with which the refrigerant exchanges heat is air, for example, but is not so limited. Such fluid may be water, refrigerant, brine, or the like, for example. Note that a supply apparatus that supplies such fluid may be a pump or the like.

That is, the air-conditioning apparatus 31 is not particularly limited as long as a heat pump system is employed.

The following describes various sensors provided in the refrigerant circuit 35. The heat-source-side unit 81 is provided with a compressor discharge refrigerant pressure sensor 201, a compressor suction refrigerant pressure sensor 202, a liquid pipe pressure sensor 203, a compressor discharge refrigerant temperature sensor 205, a compressor suction refrigerant temperature sensor 206, an air temperature sensor 207, a heat-source-side heat exchanger liquid refrigerant temperature sensor 211, and a heat-source-side heat exchanger two-phase gas-liquid refrigerant temperature sensor 212. The load-side units 82-1 through 82-N are provided with load-side refrigerant liquid temperature sensors 221-1 through 221-N, inlet air temperature sensors 223-1 through 223-N, and load-side refrigerant gas temperature sensors 224-1 through 224-N, respectively.

The compressor discharge refrigerant pressure sensor 201 is disposed at the discharge side of the compressor 91, and detects the pressure of the refrigerant discharged from the compressor 91. The compressor suction refrigerant pressure sensor 202 is disposed at the suction side of the compressor 91, and detects the pressure of the refrigerant to be suctioned into the compressor 91. The liquid pipe pressure sensor 203 is disposed between the outdoor expansion device 96 and the valve 121 b, and detects the temperature of the refrigerant flowing between the outdoor expansion device 96 and the valve 121 b. The compressor discharge refrigerant temperature sensor 205 is disposed at the discharge side of the compressor 91, and detects the temperature of the refrigerant discharged from the compressor 91. The compressor suction refrigerant temperature sensor 206 is disposed at the suction side of the compressor 91, and detects the temperature of the refrigerant to be suctioned into the compressor 91. The air temperature sensor 207 is disposed, for example, between the outdoor fan 94 and a housing (not illustrated) of the heat-source-side unit 81, and detects the temperature of the air around the heat-source-side unit 81 to be suctioned by the outdoor fan 94. The heat-source-side heat exchanger liquid refrigerant temperature sensor 211 is disposed between the heat-source-side heat exchanger 93 and the outdoor expansion device 96, and detects the temperature of the refrigerant flowing between the heat-source-side heat exchanger 93 and the outdoor expansion device 96. The heat-source-side heat exchanger two-phase gas-liquid refrigerant temperature sensor 212 is disposed in the heat-source-side heat exchanger 93, and detects the temperature of the refrigerant flowing through the heat-source-side heat exchanger 93.

The detection results of the compressor discharge refrigerant pressure sensor 201, the compressor suction refrigerant pressure sensor 202, the liquid pipe pressure sensor 203, the compressor discharge refrigerant temperature sensor 205, the compressor suction refrigerant temperature sensor 206, the air temperature sensor 207, the heat-source-side heat exchanger liquid refrigerant temperature sensor 211, and the heat-source-side heat exchanger two-phase gas-liquid refrigerant temperature sensor 212 are supplied to the heat-source-side control unit 101.

The load-side refrigerant liquid temperature sensors 221-1 through 221-N are referred to as "load-side refrigerant liquid temperature sensors 221" when not particularly distinguished from each other. The inlet air temperature sensors 223-1 through 223-N are referred to as "inlet air temperature sensors 223" when not particularly distinguished from each other. The load-side refrigerant gas temperature sensors 224-1 through 224-N are referred to as "load-side refrigerant gas temperature sensors 224" when not particularly distinguished from each other.

The load-side refrigerant liquid temperature sensor 221 is disposed between the indoor expansion device 99 and the load-side heat exchanger 97, and detects the temperature of the refrigerant flowing between the indoor expansion device 99 and the load-side heat exchanger 97. The inlet air temperature sensor 223 is disposed between the indoor fan 98 and a housing (not illustrated) of the load-side unit 82, and detects the temperature of the air around the load-side unit 82 to be suctioned by the indoor fan 98. The load-side refrigerant gas temperature sensor 224 is disposed between the load-side heat exchanger 97 and the valve 121 a, and detects the temperature of the refrigerant flowing between the load-side heat exchanger 97 and the valve 121 a.

The detection results of the load-side refrigerant liquid temperature sensor 221, the inlet air temperature sensor 223, and the load-side refrigerant gas temperature sensor 224 are supplied to the load-side control unit 102.

The heat-source-side control unit 101 and the load-side control unit 102 control the flow of the refrigerant in the refrigerant circuit 35 in cooperation with each other so as to control the air-conditioning apparatus 31, and supply various signals to the controller 51. The controller 51 supplies the various signals supplied from the heat-source-side control unit 101 and the load-side control unit 102, to the remote monitoring center 15 via the communication network 5.

The remote monitoring center 15 performs various calculations on the basis of the various signals supplied via the communication network 5, and remotely monitors the air-conditioning apparatus 31. For example, the remote monitoring center 15 determines whether the air-conditioning apparatus 31 is in a failed state. Further, in the case where the air-conditioning apparatus 31 is in the failed state, the remote monitoring center 15 determines the cause of the failure. The following describes the details of the remote monitoring center 15 that performs such operations, with reference to Fig. 3.

Fig. 3 illustrates an exemplary functional configuration of the remote monitoring center 15 according to Embodiment 1 of the present invention. The remote monitoring center 15 includes the management apparatus 61, the server apparatus 63, and a router apparatus 65.

The management apparatus 61 includes a control unit 83, a communication unit 84, a storage unit 85, a display unit 87, and an operation unit 89, and performs failure diagnosis, determination of the cause of a failure, or the like of the air-conditioning apparatus 31.

The control unit 83 includes a capacity calculation unit 301, a failure cause diagnosis unit 303, and a failure prediction unit 105. The control unit 83 includes a microprocessor or the like as a main component, for example, but is not so limited.

The capacity calculation unit 301 includes a circulation amount calculation unit 311, a subcooling degree calculation unit 312, a superheat degree calculation unit 313, a discharge superheat degree calculation unit 314, and a refrigeration capacity calculation unit 315, and calculates the refrigeration capacity of the air-conditioning apparatus 31.

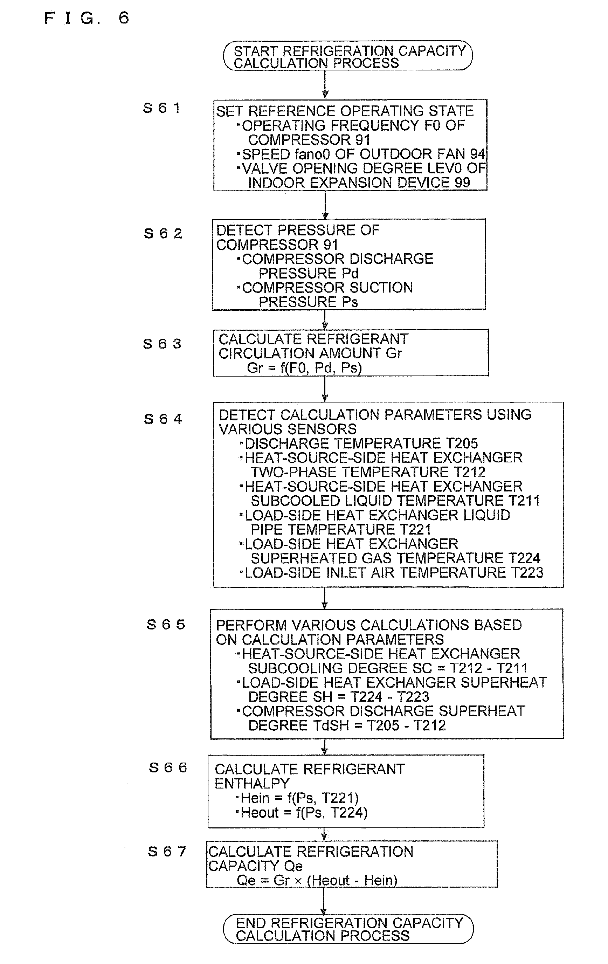

The circulation amount calculation unit 311 calculates the circulation amount of the refrigerant flowing in the air-conditioning apparatus 31, as will be described in detail below with reference to Fig. 6. The subcooling degree calculation unit 312 calculates a heat-source-side heat exchanger subcooling degree SC in the heat-source-side heat exchanger 93, as will be described in detail below with reference to Fig. 6. The superheat degree calculation unit 313 calculates a load-side heat exchanger superheat degree SH in the load-side heat exchanger 97, as will be described in detail below with reference to Fig. 6. The discharge superheat degree calculation unit 314 calculates a compressor discharge superheat degree TdSH in the compressor 91, as will be described in detail below with reference to Fig. 6. The refrigeration capacity calculation unit 315 estimates the refrigeration capacity in the load-side heat exchanger 97, as will be described in detail below with reference to Fig. 6.

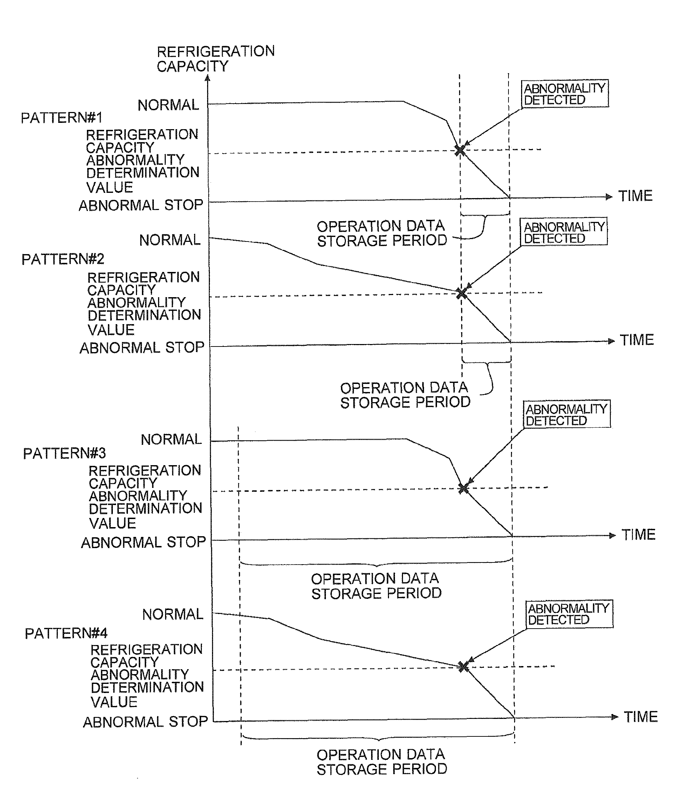

The failure cause diagnosis unit 303 performs failure diagnosis, determination of the cause of a failure, or the like of the air-conditioning apparatus 31, on the basis of the calculation result of the capacity calculation unit 301 and the detection results from a past operation database, as will be described in detail below with reference to Figs. 4 through 8.

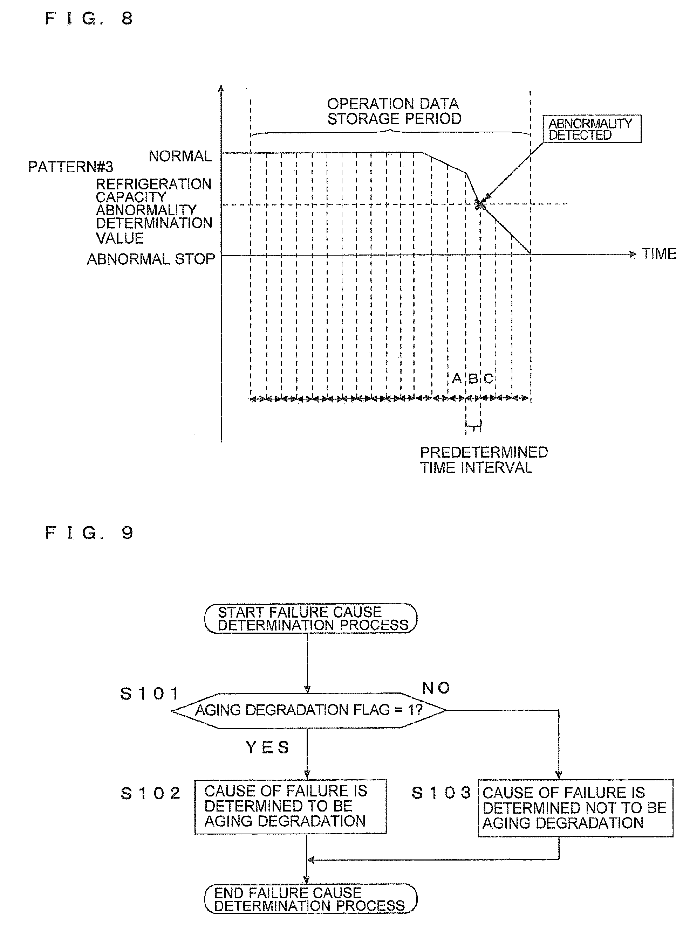

The failure prediction unit 305 performs failure prediction on the basis of the calculation result of the capacity calculation unit 301, as will be described in detail below with reference to Fig. 9.

The communication unit 84 is an interface for communication between the control unit 83 and external apparatuses. The communication unit 84 converts various signals supplied from the control unit 83 into data of a predetermined format, and supplies the data to the server apparatus 63 or the router apparatus 65. The communication unit 84 converts various signals supplied from the server apparatus 63 or the router apparatus 65 into data of a predetermined format, and supplies the data to the control unit 83.

The storage unit 85 includes, for example, a past operation database 321 and a failure diagnosis database 322. The past operation database 321 stores past operation data of the air-conditioning apparatus 31 in chronological order. The failure diagnosis database 322 stores past operation data of the air-conditioning apparatus 31 and a capacity change rate calculated from the operation data.

The display unit 87 displays the various calculation results of the control unit 83, the detection results from the past operation database 321, and the detection results from the failure diagnosis database 322 in a predetermined format.

The operation unit 89 is an input interface between the user and the management apparatus 62. The operation unit 89 receives various operations from the user, converts the results into a control instruction, and supplies the control code to the control unit 83.

The server apparatus 63 includes, for example, a database server 411, a file server 413, a print server 415, a web server 417, and a mail server 419, and has a functional configuration for providing some services, that is, processing in response to a demand, that is, a request from the management apparatus 61.

For example, the database server 411 includes various databases. Thus, in response to a request from the management apparatus 61, the database server 411 performs search, update, or the like of the various databases, and returns the result to the management apparatus 61. Further, for example, the file server 413 provides various stored files, that is, data. Further, for example, the print server 415 provides a print job for a printer. Further, for example, the web server 417 provides data such as HTML (HyperText Markup Language) files or image files for Web pages. Further, for example, the mail server 419 controls delivery of e-mail.

Note that various functions such as failure diagnosis that will be described below may be implemented as Web services provided from the server apparatus 63.

Further, the server apparatus 63 may be implemented as hardware or may be virtually implemented as software. That is, the various functions provided by the server apparatus 63 are not subject to any physical constraints.

For example, in the case where failure diagnosis or the like (described in detail below) is provided as a Web service, failure diagnosis or the like may be performed via a mobile terminal or the like. In this case, failure diagnosis or the like may be performed by the server apparatus 63 in cooperation with the management apparatus 61.

The router apparatus 65 is an apparatus that connects two or more different networks. For example, the router apparatus 65 performs path control on the basis of IP address, and relays communication between the management apparatus 61 and the controller 51.

Fig. 4 illustrates changes in refrigeration capacity with time according to Embodiment 1 of the present invention. In Fig. 4, changes in refrigeration capacity with time are illustrated for each pattern. For example, Pattern #1 and Pattern #2 are patterns in which operation data of the air-conditioning apparatus 31 for a predetermined operation data storage period after an abnormality of the air-conditioning apparatus 31 is detected by the remote monitoring center 15 is stored. Further, for example, Pattern #3 and Pattern #4 are patterns in which operation data of the air-conditioning apparatus 31 for an operation data storage period from a time point before the abnormality of the air-conditioning apparatus 31 is detected by the remote monitoring center 15 to a predetermined time point is stored. That is, the operation data storage period of Pattern #1 and Pattern #2 and the data storage period of Patten #3 and pattern #4 differ in length of the storage period.

More specifically, in Pattern #1, the refrigeration capacity is normal until halfway, but an abnormality is detected when the refrigeration capacity becomes less than or equal to a refrigeration capacity abnormality determination value for determining whether the refrigeration capacity is abnormal. The operation data storage period of the air-conditioning apparatus 31 is set to the period from a time point when the abnormality is detected to a time point when the refrigeration capacity reaches an abnormal stop state.

Further, in Pattern #2, the refrigeration capacity gradually decreases, and an abnormality is detected when the refrigeration capacity becomes less than or equal to the refrigeration capacity abnormality determination value. The operation data storage period of the air-conditioning apparatus 31 is set to the period from a time point when the abnormality is detected to a time point when the refrigeration capacity reaches the abnormal stop state.

Further, in Pattern #3, the refrigeration capacity is normal until halfway, but an abnormality is detected when the refrigeration capacity becomes less than or equal to the refrigeration capacity abnormality determination value. The operation data storage period of the air-conditioning apparatus 31 is set to the period from a time point before detection of the abnormality to a time point when the refrigeration capacity reaches the abnormal stop state.

Further, in Pattern #4, the refrigeration capacity gradually decreases, and an abnormality is detected when the refrigeration capacity becomes less than or equal to the refrigeration capacity abnormality determination value. The operation data storage period of the air-conditioning apparatus 31 is set to the period from a time point before detection of the abnormality to a time point when the refrigeration capacity reaches the abnormal stop state.

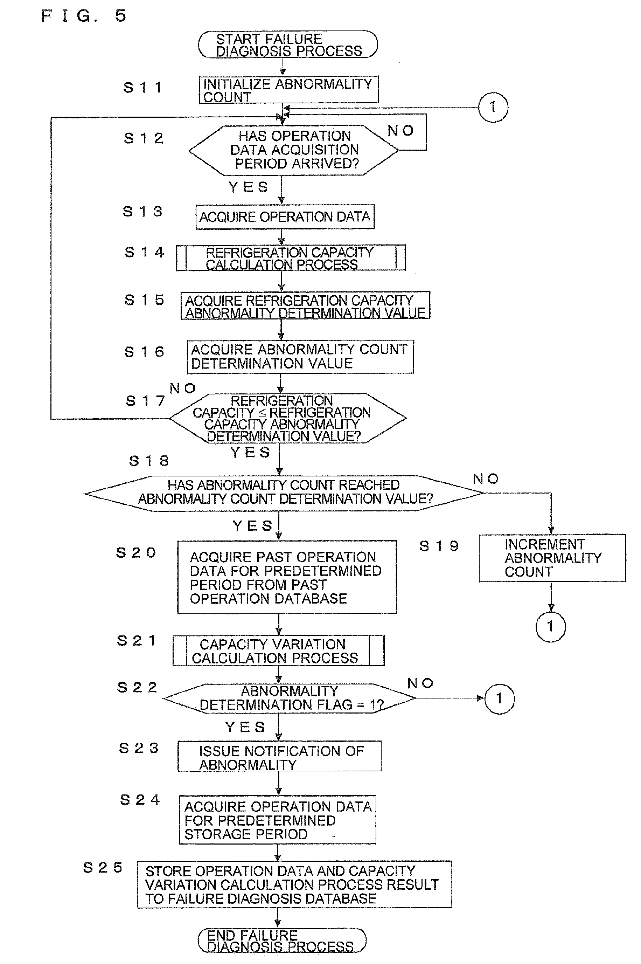

That is, in Pattern #1 and Pattern #2, only the operation data after detection of the abnormality is stored. On the other hand, in Pattern #3 and Pattern #4, the operation data before detection of the abnormality is also stored. Accordingly, in Pattern #1 and Pattern #2, data on changes in refrigeration capacity during the period before the failing into the abnormal state is not stored. On the other hand, in Pattern #3 and Pattern #4, data on changes in refrigeration capacity during the period before the failing into the abnormal state is stored. Thus, in Pattern #3 and Pattern #4, it is possible to examine changes in refrigeration capacity during the period before the failing into the abnormal state, and therefore possible to determine the cause of failing into the abnormal state. The following described how to determine the cause of failing into the abnormal state with reference to Figs. 5 through 8.

Fig. 5 is a flowchart illustrating a failure diagnosis process according to Embodiment 1 of the present invention.

(Step S11)

The failure cause diagnosis unit 303 initializes the abnormality count. The abnormality count is a parameter that counts the number of times that the refrigeration capacity becomes less than or equal to the refrigeration capacity abnormality determination value (described below). As will be described, a determination is made on whether the obtained refrigeration capacity is temporal, using the abnormality count as the parameter.

(Step S12)

The failure cause diagnosis unit 303 determines whether an operation data acquisition period has arrived. If the failure cause diagnosis unit 303 determines that an operation data acquisition period has arrived, the process proceeds to step S13. On the other hand, if the failure cause diagnosis unit 303 determines that an operation data acquisition period has not been arrived, the process returns to step S12. The operation data acquisition period is an interval at which the failure cause diagnosis unit 303, that is, the remote monitoring center 15 acquires operation data of the air-conditioning apparatus 31 installed in each building 11. For example, if the operation data acquisition period is set to one hour, it is possible to perform failure diagnosis on the basis of changes in the operation data of each hour. Further, for example, if the operation data acquisition period is set to one day, it is possible to perform failure diagnosis on the basis of changes in the operation data of each day. That is, it is possible to change the number of times the failure diagnosis is performed in accordance with the operation data acquisition period.

(Step S13)

The failure cause diagnosis unit 303 acquires operation data. The operation data refers to various parameters used for calculation in a refrigeration capacity calculation process (described below). For example, when setting a reference operating state, the failure cause diagnosis unit 303 acquires an operating frequency F0 of the compressor 91, a speed fano0 of the outdoor fan 94, and a valve opening degree LEV0 of the indoor expansion device 99. Further, for example, when detecting the pressure of the compressor 91, the failure cause diagnosis unit 303 acquires a compressor discharge pressure Pd and a compressor suction pressure Ps. Further, for example, when calculating the heat-source-side heat exchanger subcooling degree SC, the failure cause diagnosis unit 303 acquires a heat-source-side heat exchanger two-phase temperature T212 and a heat-source-side heat exchanger subcooled liquid temperature T211. Further, for example, when calculating the load-side heat exchanger superheat degree SH, the failure cause diagnosis unit 303 acquires a load-side heat exchanger superheated gas temperature T224 and a load-side inlet air temperature T223. Further, for example, when calculating the compressor discharge superheat degree TdSH, the failure cause diagnosis unit 303 acquires a discharge temperature T205 and the heat-source-side heat exchanger two-phase temperature T212.

(Step S14)

The failure cause diagnosis unit 303 causes the capacity calculation unit 301 to perform a refrigeration capacity calculation process. The refrigeration capacity calculation process will be described in detail below with reference to Fig. 6. Fig. 6 is a flowchart illustrating the refrigeration capacity calculation process according to Embodiment 1 of the present invention.

(Step S61)

The capacity calculation unit 301 sets the reference operating state. More specifically, the capacity calculation unit 301 sets the operating frequency F0 of the compressor 91, the speed fano0 of the outdoor fan 94, and the valve opening degree LEV0 of the indoor expansion device 99, for the air-conditioning apparatus 31.
It is now supposed that, on the basis of the various parameters set in this step, the air-conditioning apparatus 31 operates and enters a stable state.

(Step S62)

The capacity calculation unit 301 detects a pressure of the compressor 91. More specifically, the capacity calculation unit 301 detects the compressor discharge pressure Pd using the compressor discharge refrigerant pressure sensor 201, and detects the compressor suction pressure Ps using the compressor suction refrigerant pressure sensor 202.

(Step S63)

The capacity calculation unit 301 calculates a refrigerant circulation amount Gr. More specifically, the capacity calculation unit 301 causes the circulation amount calculation unit 311 to calculate the refrigerant circulation amount Gr on the basis of the operating frequency F0, the compressor discharge pressure Pd, and the compressor suction pressure Ps of the compressor 91, using the following Formula (1).
(Formula 1)

$$Gr = f(F0, Pd, Ps) \cdots (1)$$

Note that Gr = f(F0, Pd, Ps) may be implemented in a manner such that a correspondence table for each parameter is prepared in advance and Gr is calculated by referring to the correspondence table. For example, a table may be defined in advance such that when F0, Pd, and Ps are determined, the corresponding refrigerant circulation amount Gr is determined.

(Step S64)

The capacity calculation unit 301 detects calculation parameters using the various sensors. More specifically, the capacity calculation unit 301 detects the discharge temperature T205 using the compressor discharge refrigerant temperature sensor 205. Further, the capacity calculation unit 301 detects the heat-source-side heat exchanger two-phase temperature T212 using the heat-source-side heat exchanger two-phase gas-liquid refrigerant temperature sensor 212. Further, the capacity calculation unit 301 detects the heat-source-side heat exchanger subcooled liquid temperature T211 using the heat-source-side heat exchanger liquid refrigerant temperature sensor 211. Further, the capacity calculation unit 301 detects a load-side heat exchanger liquid pipe temperature T221 using the load-side refrigerant liquid temperature sensor 221. Further, the capacity calculation unit 301 detects the load-side heat exchanger superheated gas temperature T224 using the load-side refrigerant gas temperature sensor 224. Further, the capacity calculation unit 301 detects the load-side inlet air temperature T223 using the inlet air temperature sensor 223.

(Step S65)

The capacity calculation unit 301 performs various calculations on the basis of the respective calculation parameters. More specifically, the capacity calculation unit 301 issues, to the subcooling degree calculation unit 312, an ( instruction for calculating the heat-source-side heat exchanger subcooling degree SC on the basis of the heat-source-side heat exchanger two-phase temperature T212 and the heat-source-side heat exchanger subcooled liquid temperature T211, using the following Formula (2). In response to the instruction from the capacity calculation unit 301, the subcooling degree calculation unit 312 calculates the heat-source-side heat exchanger subcooling degree SC, using the following Formula (2).
(Formula 2)

$$SC = T212 - T211 \cdots (2)$$

Further, the capacity calculation unit 301 issues, to the superheat degree calculation unit 313, an instruction for calculating the load-side heat exchanger superheat degree SH on the basis of the load-side heat exchanger superheated gas temperature T224 and the load-side inlet air temperature T223, using the following Formula (3). In response to the instruction from the capacity calculation unit 301, the superheat degree calculation unit 313 calculates the load-side heat exchanger superheat degree SH, using the following Formula (3).
Formula 3)

$$SH = T224 - T223 \cdots (3)$$

Further, the capacity calculation unit 301 issues, to the discharge superheat degree calculation unit 314, an instruction for calculating the compressor discharge superheat degree TdSH on the basis of the discharge temperature T205 and the heat-source-side heat exchanger two-phase temperature T212, using the following Formula (4). In response to the instruction from the capacity calculation unit 301, the discharge superheat degree calculation unit 314 calculates the compressor discharge superheat degree TdSH, using the following Formula (4).
(Formula 4)

$$TdSH = T205 - T212 \cdots (4)$$

(Step S66)

The capacity calculation unit 301 calculates a refrigerant enthalpy. More specifically, the capacity calculation unit 301 issues, to the refrigeration capacity calculation unit 315, an instruction for calculating a refrigerant enthalpy Hein at the inlet side of the load-side heat exchanger 97 on the basis of the compressor suction pressure Ps and the load-side heat exchanger liquid pipe temperature T221, using the following Formula (5). In response to the instruction from the capacity calculation unit 301, the refrigeration capacity calculation unit 315 calculates the refrigerant enthalpy Hein at the inlet side of the load-side heat exchanger 97, using the following Formula (5).
(Formula 5)

$$Hein = f(Ps, T221) \cdots (5)$$

Further, the capacity calculation unit 301 issues, to the refrigeration capacity calculation unit 315, an instruction for calculating a refrigerant enthalpy Hout at the outlet side of the load-side heat exchanger 97 on the basis of the compressor suction pressure Ps and the load-side heat exchanger superheated gas temperature T224, using the following Formula (6). In response to the instruction from the capacity calculation unit 301, the refrigeration capacity calculation unit 315 calculates the refrigerant enthalpy Hout at the outlet side of the load-side heat exchanger 97, using the following Formula (6).
(Formula 6)

$$Hout = f(Ps, T224) \cdots (6)$$

Note that Hein also indicates the degree of subcooling of the liquid refrigerant flowing out of the heat-source-side heat exchanger 93. Further, Hout also indicates the degree of superheat of the gas refrigerant flowing out of the load-side heat exchanger 97.
Further, Formulas (5) and (6) are functions defined in advance on the basis of the type of the refrigerant circulating in the refrigerant circuit.

(Step S67)

The capacity calculation unit 301 calculates a refrigeration capacity Qe. More specifically, the capacity calculation unit 301 issues, to the refrigeration capacity calculation unit 315, an instruction for calculating the refrigeration capacity Qe on the basis of the refrigerant circulation amount Gr, the refrigerant enthalpy Hein at the inlet side of the load-side heat exchanger 97, and the refrigerant enthalpy Hout at the outlet side of the load-side heat exchanger 97, using the following Formula (7). In response to the instruction from the capacity calculation unit 301, the refrigeration capacity calculation unit 315 calculates the refrigeration capacity Qe, using the following Formula (7).
(Formula 7)

$$Qe = Gr \times (Heout - Hein) \cdots (7)$$

In the above, an example has been illustrated in which the remote monitoring center 15 includes the capacity calculation unit 301, and the capacity calculation unit 301 of the remote monitoring center 15 calculates the refrigeration capacity. However, the disclosure is not limited thereto. For example, the air-conditioning apparatus 31 may include the capacity calculation unit 301. Alternatively, the controller 51 may include the capacity calculation unit 301.

Further, the above description is only an example of calculation for obtaining the refrigeration capacity, and the disclosure is not limited thereto.

Now, a further description will be given with reference to Fig. 5.

(Step S15)

The failure cause diagnosis unit 303 acquires the refrigeration capacity abnormality determination value. The refrigeration capacity abnormality determination value is set to a refrigeration capacity that is abnormal. For example, in the case where an air-conditioning system operates with the refrigeration capacity in a range between 1,000 kw and 600 kw, the refrigeration capacity is abnormal when the refrigeration capacity is less than 600 kw. In this case, the refrigeration capacity abnormality determination value is set to 600 kw.

Note that the figures provided above are for illustrative purposes only, and the disclosure is not limited thereto.

(Step S16)

The failure cause diagnosis unit 303 acquires an abnormality count determination value. The abnormality count determination value is used for determining whether the refrigeration capacity is abnormal temporarily or constantly. With this process, it is possible to ignore the value at the time when the refrigeration capacity is temporarily reduced due to some effect, and thus to improve the accuracy of failure cause diagnosis. That is, it is possible to exclude the case in which the refrigeration capacity is reduced due to some noise or the like.

Note that the abnormality count determination value is, for example, but not limited to, three.

(Step S17)

The failure cause diagnosis unit 303 determines whether the refrigeration capacity is less than or equal to the refrigeration capacity abnormality determination value. If the failure cause diagnosis unit 303 determines that the refrigeration capacity is less than or equal to the refrigeration capacity abnormality determination value, the process proceeds to step S18. On the other hand, if the failure cause diagnosis unit 303 determines that the refrigeration capacity is greater than the refrigeration capacity abnormality determination value, the process returns to step S12.

(Step S18)

The failure cause diagnosis unit 303 determines whether the abnormality count has reached the abnormality count determination value. If the failure cause diagnosis unit 303 determines that the abnormality count has reached the abnormality count determination value, the process proceeds to step S20. On the other hand, if the failure cause diagnosis unit 303 determines that the abnormality count has not reached the abnormality count determination value, the process proceeds to step S19.

(Step S19)

The failure cause diagnosis unit 303 increments the abnormality count. For example, the failure cause diagnosis unit 303 adds 1 to the abnormality count, that is, increments the abnormality count by 1.

In the above, an example has been illustrated in which the abnormality count is incremented by 1, but the disclosure is not limited thereto.

(Step S20)

The failure cause diagnosis unit 303 acquires past operation data for a predetermined period from the past operation database 321. For example, the failure cause diagnosis unit 303 acquires operation data for the last month from the past operation database 321.

In the above description, an example has been illustrated in which the operation data for the last month is acquired as the operation data for the predetermined period, but the disclosure is not limited thereto.

(Step S21)

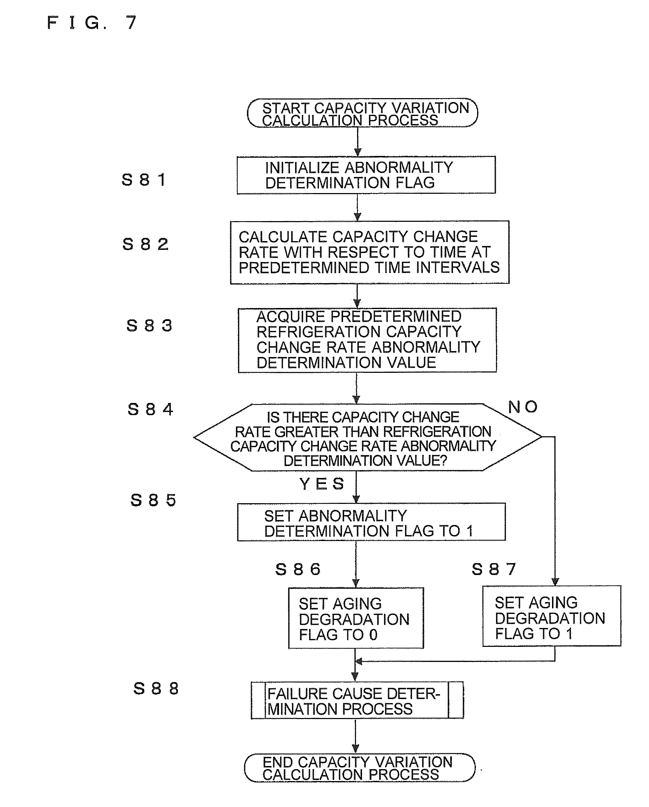

The failure cause diagnosis unit 303 executes a capacity variation calculation process. The capacity variation calculation process will be described in detail below with reference to Fig. 7. Fig. 7 is a flowchart illustrating the capacity variation calculation process according to Embodiment 1 of the present invention.

(Step S81)

The failure cause diagnosis unit 303 initializes an abnormality determination flag.

(Step S82)

The failure cause diagnosis unit 303 calculates the capacity change rate with respect to time at predetermined time intervals. The predetermined time intervals are a plurality of small time segments obtained by dividing the operation data storage period on the time axis, as will be described in detail below with reference to Fig. 8.

Fig. 8 illustrates the predetermined time intervals for calculation of the capacity change rate with respect to time according to Embodiment 1 of the present invention. As illustrated in Fig. 8, the operation data storage period is divided into a plurality of predetermined time intervals. The failure cause diagnosis unit 303 calculates the capacity change rate with respect to time at the predetermined time intervals. In the following description, it is assumed that, for example, the capacity change rate of a time interval named A is a; the capacity change rate of a time interval named B is b; and the capacity change rate of a time interval named C is c.

(Step S83)

The failure cause diagnosis unit 303 acquires a predetermined refrigeration capacity change rate abnormality determination value. The refrigeration capacity change rate abnormality determination value is for determining whether the capacity change rate with respect to time is in an allowable range, as will be described in detail below.

(Step S84)

The failure cause diagnosis unit 303 determines whether there is a capacity change rate greater than the refrigeration capacity change rate abnormality determination value. If the failure cause diagnosis unit 303 determines that there is a capacity change rate greater than the refrigeration capacity change rate abnormality determination value, the process proceeds to step S85. On the other hand, if the failure cause diagnosis unit 303 determines that there is no capacity change rate greater than the refrigeration capacity change rate abnormality determination value, the process proceeds to step S87.

The following describes reason why determination is performed using the refrigeration capacity change rate abnormality determination value. The capacity change rate is the change rate of the refrigeration capacity with respect to time. That is, the capacity change rate represents the inclination of the characteristic graph of the refrigeration capacity. Accordingly, comparing the capacity change rate with the refrigeration capacity change rate abnormality determination value corresponds to determining the degree of the inclination of the characteristic graph of the refrigeration capacity. If the inclination of the characteristic graph of the refrigeration capacity is steep, it indicates that the refrigeration capacity decreases sharply. That is, a determination on whether the air-conditioning apparatus 31 is in the abnormal state may be made on the basis of the degree of reduction in the refrigeration capacity. Accordingly, a determination is made on whether the air-conditioning apparatus 31 is in the abnormal state in such a manner that the refrigeration capacity change rate abnormality determination value is determined in advance, and a comparison between the capacity change rate and the refrigeration capacity change rate abnormality determination value is performed.

In other words, processing at this stage is processing to be performed when the refrigeration capacity is already less than or equal to the refrigeration capacity abnormality determination value (see Steps S11 through S20). That is, the refrigeration capacity has decreced for some reason. At this point, if an inclination of the characteristic graph in the case where the inclination of the characteristic graph of the refrigeration capacity is steep, that is, such a capacity change rate is calculated from the operation data of the period before the determination using the refrigeration capacity abnormality determination value, the air-conditioning apparatus 31 is determined to be in the abnormal state, not due to aging degradation, but due to some other factors. On the other hand, at this point, if an inclination of the characteristic graph in the case where the inclination of the characteristic graph of the refrigeration capacity is not steep, that is, such a capacity change rate is calculated from the operation data of the period before the determination using the refrigeration capacity abnormality determination value, the refrigeration capacity of the air-conditioning apparatus 31 is determined to be decreasing due to aging degradation.

For example, if the capacity change rate b is a capacity change rate greater than the refrigeration capacity change rate abnormality determination value, the air-conditioning apparatus 31 may be determined to be in the abnormal state on the basis of the refrigeration capacity change rate abnormality determination value in the time interval B prior to the detection of the abnormality.

(Step S85)

The failure cause diagnosis unit 303 sets the abnormality determination flag to 1.

(Step S86)

The failure cause diagnosis unit 303 sets the aging degradation flag to 0.

(Step S87)

The failure cause diagnosis unit 303 sets the aging degradation flag to 1.

(Step S88)

The failure cause diagnosis unit 303 executes a failure cause determination process. The failure cause determination process will be described in detail below with reference to Fig. 9.

Fig. 9 is a flowchart illustrating the failure cause determination process according to Embodiment 1 of the present invention.

(Step S101)

The failure cause diagnosis unit 303 determines whether the aging degradation flag is 1. If the failure cause diagnosis unit 303 determines that the aging degradation flag is 1, the process proceeds to step S102. On the other hand, if the failure cause diagnosis unit 303 determines that the aging degradation flag is not 1, the process proceeds to step S103.

(Step S102)

The failure cause diagnosis unit 303 determines that the cause of the failure is aging degradation. That is, the failure cause diagnosis unit 303 determines that the reduction in refrigeration capacity is due to aging degradation.

(Step S103)

The failure cause diagnosis unit 303 determines that the cause of the failure is not aging degradation. That is, the failure cause diagnosis unit 303 determines that the reduction in refrigeration capacity is not due to aging degradation but is due to some external factors. In this case, a notification of the abnormality needs to be issued immediately, and therefore an operation for issuing a notification of the abnormality will be performed in the subsequent process, for example.
Now, a further description will be given with reference to Fig. 5.

(Step S22)

The failure cause diagnosis unit 303 determines whether the abnormality determination flag is 1. If the failure cause diagnosis unit 303 determines that the abnormality determination flag is 1, the process proceeds to step S23. On the other hand, if the failure cause diagnosis unit 303 determines that the abnormality determination flag is not 1, the process returns to step S12.

(Step S23)

The failure cause diagnosis unit 303 issues a notification of the abnormality. For example, the failure cause diagnosis unit 303 may issue a notification of the abnormality to the manager (not illustrated) of the building 11. Further, for example, the failure cause diagnosis unit 303 may issue a notification of the abnormality to the terminal 71 of the service center. Further, for example, the failure cause diagnosis unit 303 may issue a notification of the abnormality to the display unit 87. A notification of the abnormality may be issued by, for example, transmitting e-mail or the like, but the disclosure is not limited thereto. For example, a notification of the abnormality may be issued by sound. Further, a notification of the abnormality may be issued by changing the intervals at which a lamp or the like (not illustrated) blinks.

(Step S24)

The failure cause diagnosis unit 303 acquires operation data for the predetermined storage period. More specifically, the failure cause diagnosis unit 303 acquires operation data for 10 minutes, for example.
Note that the predetermined period described above is for illustrative purposes only, and the disclosure is not limited thereto.

(Step S25)

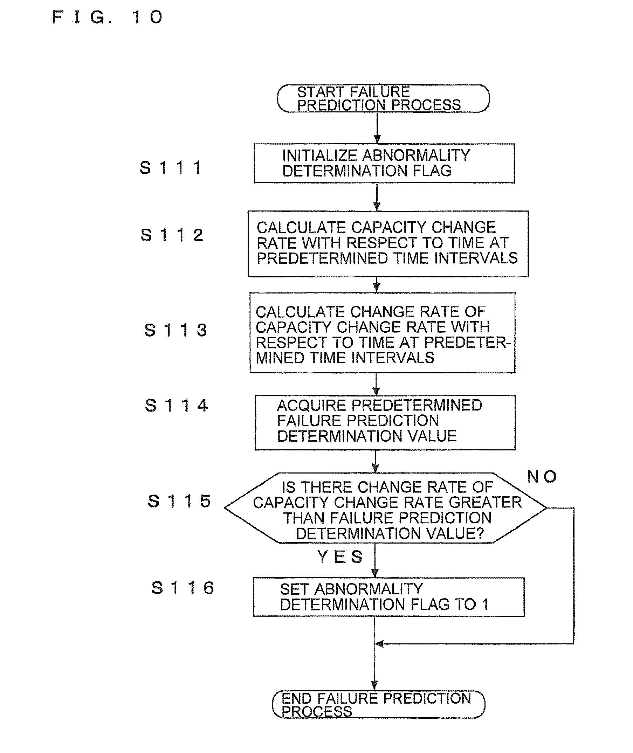

The failure cause diagnosis unit 303 stores the operation data and the result of the capacity variation calculation process obtained from the operation data in the failure diagnosis database 322, and the process ends. For example, the failure cause diagnosis unit 303 stores the operation data and the capacity change rate indicated in the result of the capacity variation calculation process obtained from the operation data as a pair in the failure diagnosis database 322, and the process ends.
In the above, an example of diagnosing the cause of a failure has been illustrated. By using the capacity change rate, it is possible to predict a failure. Now, failure prediction using the capacity change rate will be described with reference to Fig. 10.
Fig. 10 is a flowchart illustrating a failure prediction process according to Embodiment 1 of the present invention.

(Step S111)

The failure prediction unit 305 initializes the abnormality determination flag.

(Step S112)

The failure prediction unit 305 calculates the capacity change rate with respect to time at predetermined time intervals.

(Step S113)

The failure prediction unit 305 calculates the change rate of the capacity change rate with respect to time at predetermined time intervals. That is, the failure prediction unit 305 calculates the degree of change in the capacity change rate. By calculating the degree of change in the capacity change rate, it is possible to determine whether the capacity change rate will increase or decrease. If the degree of change in the capacity change rate will increase further, the capacity change rate will continue to exhibit a steep slope over time. Therefore, in this case, a prediction may be made that a failure is likely to occur in the near future. On the other hand, if the degree of change in the capacity change rate will not increase further, the capacity change rate will not continue to exhibit a steep slope over time. Therefore, in this case, a prediction may be made that a failure is not likely to occur in the near future.

(Step S114)

The failure prediction unit 305 acquires a predetermined failure prediction determination value.

(Step S115)

The failure prediction unit 305 determines whether there is a change rate of the capacity change rate greater than the failure prediction determination value. If the failure prediction unit 305 determines that there is a change rate of the capacity change rate greater than the failure prediction determination value, the process proceeds to step S116. On the other hand, if the failure prediction unit 305 determines that there is no change rate of the capacity change rate greater than the failure prediction determination value, the process ends.

(Step S116)

The failure prediction unit 305 sets the abnormality determination flag to 1, and the process ends.

Note that processing in steps S111 through step S116 may be incorporated in place of the capacity variation calculation process of step S21 of Fig. 5. Thus, the failure prediction process is incorporated into the failure diagnosis process.

As described above, it is possible to identify the cause of a failure of the air-conditioning apparatus 31 by comparing the change rate of the refrigeration capacity with the abnormality determination value over a certain period prior to the failure.

In Embodiment 1 of the present invention described above, operation data on at least one air-conditioning apparatus 31 is exchanged between the at least one air-conditioning apparatus 31 and the management apparatus 61 that manages the at least one air-conditioning apparatus 31 in the monitoring system 1. The management apparatus 61 includes the failure cause diagnosis unit 303 that diagnoses the cause of a failure of the at least one air-conditioning apparatus 31 on the basis of the operation data. A refrigeration capacity abnormality determination value for determining whether a refrigeration capacity calculated from the operation data on the air-conditioning apparatus 31 is abnormal and a refrigeration capacity change rate abnormality determination value for determining whether a refrigeration capacity change rate of the refrigeration capacity with respect to time is abnormal are set in the failure cause diagnosis unit 303. The failure cause diagnosis unit 303 determines that the air-conditioning apparatus 31 is in a failed state if the refrigeration capacity is less than or equal to the refrigeration capacity abnormality determination value.

The failure cause diagnosis unit 303 determines that the cause of the failure of the air-conditioning apparatus 31 is not aging degradation if the air-conditioning apparatus 31 is in the failed state and if the refrigeration capacity change rate of the refrigeration capacity is greater than the refrigeration capacity change rate abnormality determination value, and determines that the cause of the failure of the air-conditioning apparatus 31 is aging degradation if the air-conditioning apparatus 31 is in the failed state and if the refrigeration capacity change rate of the refrigeration capacity is not greater than the refrigeration capacity change rate abnormality determination value.

With the configuration described above, it is possible to identify the cause of a failure of the air-conditioning apparatus 31. Further, since the cause of a failure of the air-conditioning apparatus 31 can be identified, in the case where a reduction in the refrigeration capacity of the air-conditioning apparatus 31 is not due to aging degradation, but due to some other external factors, it is possible to immediately issue a notification of the abnormality, and thus to reduce the risk of secondary failure and the like.

For example, in the case where the air-conditioning apparatus 31 is installed in a data center, a failure of the air-conditioning apparatus 31 will be a factor that leads to a failure of the data center. Even in such a case, since a quick response is possible, the assets of the data center can be protected.

Further, since the cause of a failure can be identified, the maintenance staff who rushed to the site can perform appropriate maintenance activities. This enables both a reduction in time and a quick recovery.

Further, if the cause of a failure is aging degradation, it is possible to focus the examination on the spots which are likely to degrade easily over time. This improves the efficiency of work such as replacing parts. Further, the parts degraded over time are replaced and do not continue to be used. This makes it possible to prevent wasteful power consumption due to aging degradation. Reference Signs List

1 monitoring system 5 communication network 11 building 15 remote monitoring center 17 service center 31, 31-1 - 31-N air-conditioning apparatus 35 refrigerant circuit 41 communication line 51 controller 61 management apparatus 63 server apparatus 65 router apparatus 71 terminal 81 heat-source-side unit 82, 82-1 - 82-N load-side unit 83 control unit 84 communication unit 85 storage unit 87 display unit 89 operation unit 91 compressor 92 four-way valve 93 heat-source-side heat exchanger 94 outdoor fan 95 accumulator 96 outdoor expansion device 97, 97-1 - 97-N load-side heat exchanger 98, 98-1 - 98-N indoor fan 99, 99-1 - 99-N indoor expansion device 101 heat-source-side control unit 102, 102-1 - 102-N load-side control unit 103, 103-1, 103-N remote controller 111 first connection pipe 112 second connection pipe 121, 121 a, 121 b valve 201 compressor discharge refrigerant pressure sensor 202 compressor suction refrigerant pressure sensor 203 liquid pipe pressure sensor 205 compressor discharge refrigerant temperature sensor 206 compressor suction refrigerant temperature sensor 207 air temperature sensor 211 heat-source-side heat exchanger liquid refrigerant temperature sensor 212 heat-source-side heat exchanger two-phase gas-liquid refrigerant temperature sensor 221, 221-1 - 221-N load-side refrigerant liquid temperature sensor 223, 223-1 - 223-N inlet air temperature sensor 224, 224-1 - 224-N load-side refrigerant gas temperature sensor 301 capacity calculation unit 303 failure cause diagnosis unit 305 failure prediction unit 311 circulation amount calculation unit 312 subcooling degree calculation unit 313 superheat degree calculation unit 314 discharge superheat degree calculation unit 315 refrigeration capacity calculation unit 321 past operation database 322 failure diagnosis database 411 database server 413 file server 415 print server 417 web server 419 mail server

**Claims**

1. A monitoring system in which operation data on at least one air-conditioning apparatus is exchanged between the at least one air-conditioning apparatus and a management apparatus that manages the at least one air-conditioning apparatus, wherein:

   the management apparatus includes a failure cause diagnosis unit that diagnoses a cause of a failure of the at least one air-conditioning apparatus on the basis of the operation data;
   a refrigeration capacity abnormality determination value for determining whether a refrigeration capacity calculated from the operation data on the at least one air-conditioning apparatus is abnormal and a refrigeration capacity change rate abnormality determination value for determining whether a refrigeration capacity change rate of the refrigeration capacity with respect to time is abnormal are set in the failure cause diagnosis unit; and
   the failure cause diagnosis unit determines that the at least one air-conditioning apparatus is in a failed state if the refrigeration capacity is less than or equal to the refrigeration capacity abnormality determination value, the failure cause diagnosis unit being configured to
   determine that the cause of the failure of the at least one air-conditioning apparatus is not aging degradation if the at least one air-conditioning apparatus is determined to be in the failed state and the refrigeration capacity change rate of the refrigeration capacity is greater than the refrigeration capacity change rate abnormality determination value, and
   determine that the cause of the failure of the at least one air-conditioning apparatus is aging degradation if the at least one air-conditioning apparatus is determined to be in the failed state and the refrigeration capacity change rate of the refrigeration capacity is not greater than the refrigeration capacity change rate abnormality determination value.

2. The monitoring system of claim 1, wherein the failure cause diagnosis unit performs a determination process of determining whether the refrigeration capacity change rate is greater than the refrigeration capacity change rate abnormality determination value if the refrigeration capacity becomes less than or equal to the refrigeration capacity abnormality determination value a plurality of number of times.

3. The monitoring system of claim 2, wherein the failure cause diagnosis unit calculates a change rate of the refrigeration capacity change rate with respect to time at predetermined time intervals, and determines that the at least one air-conditioning apparatus is likely to fail if the change rate is greater than a predetermined failure prediction determination value.

4. The monitoring system of claim 3, comprising:

   a past operation database that stores the operation data in chronological order as past operation data; and
   a failure diagnosis database that stores the operation data and the capacity change rate calculated from the operation data;
   wherein the failure cause diagnosis unit calculates the change rate at predetermined time intervals, on the basis of the past operation data.

5. The monitoring system of claim 4, wherein:

   the at least one air-conditioning apparatus includes a refrigerant circuit including a heat-source-side unit and a use-side unit which are connected by pipes, the heat-source-side unit including a compressor and a heat-source-side heat exchanger, the use-side unit including an expansion valve and a use-side heat exchanger; and
   the management apparatus includes a capacity calculation unit that calculates the refrigeration capacity on the basis of the operation data on the refrigerant circuit, the capacity calculation unit including

      a circulation amount calculation unit that calculates a refrigerant circulation amount on the basis of an operating frequency of the compressor and a pressure at a discharge side of the compressor and a pressure at a suction side of the compressor, as the operation data, and

a refrigeration capacity calculation unit that calculates the refrigeration capacity on the basis of the refrigerant circulation amount and an enthalpy of refrigerant flowing into the use-side heat exchanger and an enthalpy of refrigerant flowing out of the use-side heat exchanger.

FIG. 1

FIG. 2

EP 2 913 601 A1

F I G. 3

**REMOTE MONITORING CENTER** 15

**MANAGEMENT APPARATUS** 61

**CONTROL UNIT** 83

**CAPACITY CALCULATION UNIT** 301

CIRCULATION AMOUNT CALCULATION UNIT 311

SUBCOOLING DEGREE CALCULATION UNIT 312

SUPERHEAT DEGREE CALCULATION UNIT 313

DISCHARGE SUPERHEAT DEGREE CALCULATION UNIT 314

REFRIGERATION CAPACITY CALCULATION UNIT 315

FAILURE CAUSE DIAGNOSIS UNIT 303

FAILURE PREDICTION UNIT 305

**STORAGE UNIT** 85

PAST OPERATION DATABASE 321

FAILURE DIAGNOSIS DATABASE 322

DISPLAY UNIT 87

OPERATION UNIT 89

**SERVER APPARATUS** 63

DATABASE SERVER 411

FILE SERVER 413

PRINT SERVER 415

WEB SERVER 417

MAIL SERVER 419

ROUTER APPARATUS 65

COMMU-NICATION UNIT 84

5

18

REFRIGERATION
CAPACITY

PATTERN#1

NORMAL

REFRIGERATION
CAPACITY
ABNORMALITY
DETERMINATION
VALUE

ABNORMAL STOP

ABNORMALITY
DETECTED

TIME

OPERATION DATA
STORAGE PERIOD

PATTERN#2

NORMAL

REFRIGERATION
CAPACITY
ABNORMALITY
DETERMINATION
VALUE

ABNORMAL STOP

ABNORMALITY
DETECTED

TIME

OPERATION DATA
STORAGE PERIOD

PATTERN#3

NORMAL

REFRIGERATION
CAPACITY
ABNORMALITY
DETERMINATION
VALUE

ABNORMAL STOP

ABNORMALITY
DETECTED

TIME

OPERATION DATA
STORAGE PERIOD

PATTERN#4

NORMAL

REFRIGERATION
CAPACITY
ABNORMALITY
DETERMINATION
VALUE

ABNORMAL STOP

ABNORMALITY
DETECTED

TIME

OPERATION DATA
STORAGE PERIOD

F I G. 5

START FAILURE
DIAGNOSIS PROCESS

S 1 1　INITIALIZE ABNORMALITY
COUNT

S 1 2　HAS OPERATION
DATA ACQUISITION
PERIOD ARRIVED?　　　N O

Y E S

S 1 3　ACQUIRE OPERATION DATA

S 1 4　REFRIGERATION CAPACITY
CALCULATION PROCESS

S 1 5　ACQUIRE REFRIGERATION CAPACITY
ABNORMALITY DETERMINATION VALUE

S 1 6　ACQUIRE ABNORMALITY COUNT
DETERMINATION VALUE

S 1 7　N O　REFRIGERATION
CAPACITY ≤ REFRIGERATION
CAPACITY ABNORMALITY
DETERMINATION VALUE?

Y E S

S 1 8　HAS ABNORMALITY COUNT REACHED
ABNORMALITY COUNT DETERMINATION VALUE?　　N O

Y E S

S 2 0　ACQUIRE PAST OPERATION
DATA FOR PREDETERMINED
PERIOD FROM PAST
OPERATION DATABASE

S 1 9　INCREMENT
ABNORMALITY
COUNT

①

S 2 1　CAPACITY VARIATION
CALCULATION PROCESS

S 2 2　ABNORMALITY
DETERMINATION FLAG = 1?　　N O　　①

Y E S

S 2 3　ISSUE NOTIFICATION OF
ABNORMALITY

S 2 4　ACQUIRE OPERATION DATA
FOR PREDETERMINED
STORAGE PERIOD

S 2 5　STORE OPERATION DATA AND CAPACITY
VARIATION CALCULATION PROCESS RESULT
TO FAILURE DIAGNOSIS DATABASE

END FAILURE
DIAGNOSIS PROCESS

FIG. 6

```
┌──────────────────────────────────────┐
│ START REFRIGERATION CAPACITY         │
│ CALCULATION PROCESS                  │
└──────────────────────────────────────┘
                  │
                  ▼
```

**S61**

SET REFERENCE OPERATING STATE
- OPERATING FREQUENCY F0 OF COMPRESSOR 91
- SPEED fano0 OF OUTDOOR FAN 94
- VALVE OPENING DEGREE LEV0 OF INDOOR EXPANSION DEVICE 99

**S62**

DETECT PRESSURE OF COMPRESSOR 91
- COMPRESSOR DISCHARGE PRESSURE Pd
- COMPRESSOR SUCTION PRESSURE Ps

**S63**

CALCULATE REFRIGERANT CIRCULATION AMOUNT Gr
Gr = f(F0, Pd, Ps)

**S64**

DETECT CALCULATION PARAMETERS USING VARIOUS SENSORS
- DISCHARGE TEMPERATURE T205
- HEAT-SOURCE-SIDE HEAT EXCHANGER TWO-PHASE TEMPERATURE T212
- HEAT-SOURCE-SIDE HEAT EXCHANGER SUBCOOLED LIQUID TEMPERATURE T211
- LOAD-SIDE HEAT EXCHANGER LIQUID PIPE TEMPERATURE T221
- LOAD-SIDE HEAT EXCHANGER SUPERHEATED GAS TEMPERATURE T224
- LOAD-SIDE INLET AIR TEMPERATURE T223

**S65**

PERFORM VARIOUS CALCULATIONS BASED ON CALCULATION PARAMETERS
- HEAT-SOURCE-SIDE HEAT EXCHANGER SUBCOOLING DEGREE SC = T212 - T211
- LOAD-SIDE HEAT EXCHANGER SUPERHEAT DEGREE SH = T224 - T223
- COMPRESSOR DISCHARGE SUPERHEAT DEGREE TdSH = T205 - T212

**S66**

CALCULATE REFRIGERANT ENTHALPY
- Hein = f(Ps, T221)
- Heout = f(Ps, T224)

**S67**

CALCULATE REFRIGERATION CAPACITY Qe
Qe = Gr × (Heout - Hein)

```
┌──────────────────────────────────────┐
│ END REFRIGERATION CAPACITY           │
│ CALCULATION PROCESS                  │
└──────────────────────────────────────┘
```

F I G. 7

```
        ┌─────────────────────────────┐
        │ START CAPACITY VARIATION    │
        │ CALCULATION PROCESS         │
        └─────────────────────────────┘
                      │
                      ▼
S 8 1     ┌─────────────────────────────┐
          │ INITIALIZE ABNORMALITY      │
          │ DETERMINATION FLAG          │
          └─────────────────────────────┘
                      │
                      ▼
S 8 2     ┌─────────────────────────────┐
          │ CALCULATE CAPACITY CHANGE   │
          │ RATE WITH RESPECT TO TIME AT│
          │ PREDETERMINED TIME INTERVALS│
          └─────────────────────────────┘
                      │
                      ▼
S 8 3     ┌─────────────────────────────┐
          │ ACQUIRE PREDETERMINED       │
          │ REFRIGERATION CAPACITY      │
          │ CHANGE RATE ABNORMALITY     │
          │ DETERMINATION VALUE         │
          └─────────────────────────────┘
                      │
                      ▼
S 8 4          IS THERE CAPACITY CHANGE          NO
          RATE GREATER THAN REFRIGERATION ──────────┐
          CAPACITY CHANGE RATE ABNORMALITY          │
               DETERMINATION VALUE?                 │
                   YES │                            │
S 8 5     ┌─────────────────────────────┐          │
          │ SET ABNORMALITY             │          │
          │ DETERMINATION FLAG TO 1     │          │
          └─────────────────────────────┘          │
                      │                             │
         S 8 6        │             S 8 7           │
          ┌──────────────┐          ┌──────────────┐
          │ SET AGING    │          │ SET AGING    │
          │ DEGRADATION  │          │ DEGRADATION  │
          │ FLAG TO 0    │          │ FLAG TO 1    │
          └──────────────┘          └──────────────┘
                      │◄────────────────────┘
                      ▼
S 8 8     ┌─────────────────────────────┐
          ║ FAILURE CAUSE DETER-        ║
          ║ MINATION PROCESS            ║
          └─────────────────────────────┘
                      │
                      ▼
        ┌─────────────────────────────┐
        │ END CAPACITY VARIATION      │
        │ CALCULATION PROCESS         │
        └─────────────────────────────┘
```

F I G. 8

OPERATION DATA
STORAGE PERIOD

ABNORMALITY
DETECTED

PATTERN#3

NORMAL

REFRIGERATION
CAPACITY
ABNORMALITY
DETERMINATION
VALUE

ABNORMAL STOP

TIME

A B C

PREDETERMINED
TIME INTERVAL

F I G. 9

START FAILURE CAUSE
DETERMINATION PROCESS

S 1 0 1

AGING DEGRADATION FLAG = 1?

NO

YES

S 1 0 2 | CAUSE OF FAILURE IS
DETERMINED TO BE
AGING DEGRADATION

S 1 0 3 | CAUSE OF FAILURE IS
DETERMINED NOT TO BE
AGING DEGRADATION

END FAILURE CAUSE
DETERMINATION PROCESS

F I G. 1 0

```
          ┌─────────────────────────┐
          │    START FAILURE        │
          │  PREDICTION PROCESS     │
          └─────────────────────────┘
                      │
                      ▼
          ┌─────────────────────────┐
  S 1 1 1 │  INITIALIZE ABNORMALITY │
          │  DETERMINATION FLAG     │
          └─────────────────────────┘
                      │
                      ▼
          ┌─────────────────────────┐
          │ CALCULATE CAPACITY      │
  S 1 1 2 │ CHANGE RATE WITH        │
          │ RESPECT TO TIME AT      │
          │ PREDETERMINED TIME      │
          │ INTERVALS               │
          └─────────────────────────┘
                      │
                      ▼
          ┌─────────────────────────┐
          │ CALCULATE CHANGE RATE   │
          │ OF CAPACITY CHANGE      │
  S 1 1 3 │ RATE WITH RESPECT TO    │
          │ TIME AT PREDETER-       │
          │ MINED TIME INTERVALS    │
          └─────────────────────────┘
                      │
                      ▼
          ┌─────────────────────────┐
          │ ACQUIRE PREDETERMINED   │
  S 1 1 4 │ FAILURE PREDICTION      │
          │ DETERMINATION VALUE     │
          └─────────────────────────┘
                      │
                      ▼
```

S 1 1 5  IS THERE CHANGE RATE OF CAPACITY CHANGE RATE GREATER THAN FAILURE PREDICTION DETERMINATION VALUE?

N O

Y E S

S 1 1 6  SET ABNORMALITY DETERMINATION FLAG TO 1

END FAILURE PREDICTION PROCESS

**INTERNATIONAL SEARCH REPORT**

| International application No. |
| --- |
| PCT/JP2012/077553 |

A.   CLASSIFICATION OF SUBJECT MATTER
*F24F11/02*(2006.01)i, *F25B49/02*(2006.01)i

According to International Patent Classification (IPC) or to both national classification and IPC

B.   FIELDS SEARCHED

Minimum documentation searched (classification system followed by classification symbols)
F24F11/02, F25B49/02

Documentation searched other than minimum documentation to the extent that such documents are included in the fields searched
Jitsuyo Shinan Koho          1922–1996   Jitsuyo Shinan Toroku Koho   1996–2012
Kokai Jitsuyo Shinan Koho    1971–2012   Toroku Jitsuyo Shinan Koho   1994–2012

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | JP 2010-127568 A  (Mitsubishi Electric Corp.), 10 June 2010 (10.06.2010), paragraphs [0001], [0003], [0011], [0012], [0075], [0076], [0090] to [0093]; fig. 6, 7, 10, 11 (Family: none) | 1-5 |
| Y | JP 2009-2651 A  (Daikin Industries, Ltd.), 08 January 2009 (08.01.2009), paragraphs [0002], [0046] to [0052], [0057] to [0061], [0087], [0106] to [0108] (Family: none) | 1-5 |
| Y | JP 2009-247065 A  (Daikin Industries, Ltd.), 22 October 2009 (22.10.2009), paragraphs [0044] to [0046] (Family: none) | 2-5 |

| ☒   Further documents are listed in the continuation of Box C. | ☐   See patent family annex. |
| --- | --- |

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| 10 December, 2012 (10.12.12) | 18 December, 2012 (18.12.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/077553 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-61138 A  (Panasonic Corp.),<br>26 March 2009 (26.03.2009),<br>paragraph [0049]<br>(Family: none) | 2-5 |
| A | WO 2006/090451 A1  (Mitsubishi Electric Corp.),<br>31 August 2006 (31.08.2006),<br>paragraphs [0026], [0059] to [0063]<br>& US 2007/0204635 A1    & EP 1852664 A1<br>& CN 1926392 A | 1 |
| A | JP 2007-240036 A  (NTT Facilities, Inc.),<br>20 September 2007 (20.09.2007),<br>paragraphs [0001] to [0017]<br>(Family: none) | 1 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4396286 B
- JP 4281334 B
- JP 2004092976 A